# EUROPEAN PATENT APPLICATION

(11) **EP 4 349 786 A1**
(43) Date of publication of application: **10.04.2024**
(21) Application number: 22811070.6
(22) Date of filing: 19.04.2022
(51) Int. Cl.: C01G 35/02, H01M 4/139, H01M 4/62, H01M 10/0562, H01M 10/0585

(54) **POSITIVE ELECTRODE MATERIAL, METHOD FOR MANUFACTURING POSITIVE ELECTRODE, METHOD FOR MANFACTURING POSITIVE ELECTRODE PLATE, AND METHOD FOR MANUFACTURING BATTERY**

(30) Priority: 28.05.2021 JP 2021090615
(71) Applicant: Panasonic Intellectual Property Management Co., Ltd., Kadoma-shi, Osaka 571-0057 (JP)
(72) Inventor: TAKEUCHI, Kaori, Tokyo 103-0022 (JP); SUGIMOTO, Yuta, Tokyo 103-0022 (JP); MIYAZAKI, Akinobu, Tokyo 103-0022 (JP); SASAKI, Izuru, Tokyo 103-0022 (JP)
(74) Representative: Grünecker Patent- und Rechtsanwälte PartG mbB
(86) International application number: PCT/JP2022/018138
(87) International publication number: WO 2022/249796

(57) **Abstract**

A positive electrode material 1000 includes a positive electrode active material 110, a solid electrolyte 100, and an organic solvent 111. The solid electrolyte 100 contains Li, M, O, and X. M is at least one selected from the group consisting of Ta and Nb. X is at least one selected from the group consisting of F, Cl, Br, and I. The organic solvent 111 has a boiling point of less than or equal to 212°C.

## Description

### Technical Field

The present disclosure relates to a positive electrode material, a method of producing a positive electrode, a method of producing a positive electrode plate, and a method of producing a battery.

### Background Art

A lithium secondary battery includes a positive electrode, a negative electrode, and an electrolyte layer located between the positive electrode and the negative electrode. For example, an all-solid-state battery including a solid electrolyte in the electrolyte layer has been proposed as a safe battery.

In the production of the all-solid-state battery, the positive electrode is produced, for example, by a coating method. In the coating method, for example, a slurry containing a positive electrode active material, a solid electrolyte, and a solvent is applied onto a current collector to form a coating film, and the coating film is dried to produce the positive electrode (e.g., PTL 1).

### Citation List

### Patent Literature

PTL 1: Japanese Unexamined Patent Application Publication No. 2015-18712

### Summary of Invention

The present disclosure provides a positive electrode material suitable for production of a positive electrode that can improve the charge and discharge efficiency of the battery.

A positive electrode material of the present disclosure comprises:
a positive electrode active material;
a solid electrolyte; and
an organic solvent, wherein
the solid electrolyte contains Li, M, O, and X,
M is at least one selected from the group consisting of Ta and Nb,
X is at least one selected from the group consisting of F, Cl, Br, and I, and
the organic solvent has a boiling point of less than or equal to 212°C.

The present disclosure can provide a positive electrode material suitable for production of a positive electrode that can improve the charge and discharge efficiency of the battery.

### Brief Description of Drawings

[Fig. 1] Fig. 1 is a schematic view of a positive electrode material according to a first embodiment.
[Fig. 2] Fig. 2 is a flowchart indicating an example of a method of producing a positive electrode according to a second embodiment.
[Fig. 3] Fig. 3 is a flowchart indicating an example of a method of producing a positive electrode plate according to a third embodiment.
[Fig. 4] Fig. 4 is a cross-sectional view illustrating a schematic configuration of the positive electrode plate produced by the method of producing a positive electrode plate according to the third embodiment.
[Fig. 5] Fig. 5 is a schematic view of a battery produced by a method of producing a battery according to a fourth embodiment.
[Fig. 6] Fig. 6 is a graph indicating X-ray diffraction patterns of solid electrolytes in Examples 1 to 3 and Comparative Example 1.

### Description of Embodiments

### (Underlying Knowledge Forming Basis of the Present Disclosure)

In the field of a secondary battery that requires a higher energy density and a higher capacity, an organic electrolyte solution in which an electrolyte salt is dissolved in an organic solvent has been used conventionally and predominantly. In the secondary battery using the organic electrolyte solution, liquid leakage is a concern, and the possibility that the amount of heat generation will be increased by a short circuit or the like has also been pointed out.

Meanwhile, an all-solid-state secondary battery using an inorganic solid electrolyte instead of the organic electrolyte solution is increasingly drawing attention. The all-solid-state secondary battery causes no liquid leakage. Since the inorganic solid electrolyte is nonflammable, heat generation caused by a short circuit or the like is expected to be reduced.

Known inorganic solid electrolytes used in all-solid-state secondary batteries include a sulfide solid electrolyte containing sulfur as a main component and an oxide solid electrolyte containing a metal oxide as a main component. An oxyhalide solid electrolyte, which is sulfur-free and capable of having relatively high ion conductivity, is expected to serve as a safer solid electrolyte. The oxyhalide solid electrolyte means a solid electrolyte containing an oxygen element and a halogen element.

In production of an all-solid-state secondary battery, a positive electrode is produced, for example, by a coating method. In the coating method, for example, a slurry that contains a positive electrode active material, a solid electrolyte, and a solvent is applied onto a current collector to form a coating film, and the coating film is dried to produce a positive electrode. The inventors have newly found that, when the positive electrode is produced by the coating method using an oxyhalide solid electrolyte, the resistance of the resulting positive electrode may increase. It was also found that batteries including such a positive electrode cannot have sufficient charge and discharge efficiency. In view of this, the inventors have conducted an intensive study of the positive electrode produced by the coating method using an oxyhalide solid electrolyte and have found a new positive electrode material that can form a positive electrode in which an increase in resistance is reduced.

### (Summary of an Aspect of Disclosure)

A positive electrode material according to a first aspect of the present disclosure comprises:
a positive electrode active material;
a solid electrolyte; and
an organic solvent, wherein
the solid electrolyte contains Li, M, O, and X,
M is at least one selected from the group consisting of Ta and Nb,
X is at least one selected from the group consisting of F, Cl, Br, and I, and
the organic solvent has a boiling point of less than or equal to 212°C.

The positive electrode material according to the first aspect can form a positive electrode in which an increase in resistance is reduced. Although it is not entirely clear why the resistance of the positive electrode produced by the coating method using an oxyhalide solid electrolyte increases, one possible cause is that the residual solvent lowers the electronic conductivity and the ion conductivity, resulting in an increase in the resistance. It is thought that the positive electrode material according to the first aspect can form a positive electrode having less residual solvent, and thus an increase in resistance of the positive electrode can be reduced. As above, in a battery including the positive electrode produced by using the positive electrode material according to the first aspect, an increase in internal resistance is reduced, and thus the battery has improved charge and discharge efficiency. In other words, the positive electrode material according to the first aspect is suitable for production of a positive electrode that can improve the charge and discharge efficiency of the battery.

According to a second aspect of the present disclosure, for example, in the positive electrode material according to the first aspect, the organic solvent may have a boiling point of less than or equal to 208°C.

The positive electrode material according to the second aspect is suitable for production of a positive electrode that can further improve the charge and discharge efficiency of the battery.

According to a third aspect of the present disclosure, for example, in the positive electrode material according to the first or second aspect, X may include Cl.

The positive electrode material according to the third aspect is suitable for production of a positive electrode that can further improve the charge and discharge efficiency of the battery.

According to a fourth aspect of the present disclosure, for example, in the positive electrode material according to any one of the first to third aspects, the solid electrolyte may have a crystalline phase in which at least one peak exists in a diffraction angle 2θ range of greater than or equal to 11.05° and less than or equal to 13.86° in an X-ray diffraction pattern obtained by X-ray diffraction measurement using Cu-Kα radiation as a radiation source.

In the positive electrode material according to the fourth aspect, the solid electrolyte has the above-described crystalline phase, and thus paths that allow diffusion of lithium ions in the solid electrolyte are readily formed. Thus, the positive electrode material according to the fourth aspect contains a solid electrolyte having higher lithium-ion conductivity. Thus, the positive electrode produced by using the positive electrode material according to the fourth aspect can further improve the charge and discharge efficiency of the battery.

According to a fifth aspect of the present disclosure, for example, in the positive electrode material according to any one of the first to fourth aspects, a molar ratio of O to X, O/X, in the solid electrolyte may be greater than or equal to 0.16 and less than or equal to 0.35.

In the positive electrode material according to the fifth aspect, when the molar ratio O/X of the solid electrolyte is within the above range, the solid electrolyte is highly likely to have a crystalline phase having high conductivity. This further improves the lithium-ion conductivity of the solid electrolyte in the positive electrode material. Thus, the positive electrode produced by using the positive electrode material according to the sixth aspect can further improve the charge and discharge efficiency of the battery.

According to a sixth aspect of the present disclosure, for example, in the positive electrode material according to any one of the first to fifth aspects, a molar ratio of Li to M, Li/M, in the solid electrolyte may be greater than or equal to 0.60 and less than or equal to 2.4.

In the positive electrode material according to the sixth aspect, when the molar ratio Li/M of the solid electrolyte is within the above range, the concentration of Li as a conduction carrier in the solid electrolyte can be optimized. This further improves the lithium-ion conductivity of the solid electrolyte in the positive electrode material. Thus, the positive electrode produced by using the positive electrode material according to the sixth aspect can further improve the charge and discharge efficiency of the battery.

According to a seventh aspect of the present disclosure, for example, in the positive electrode material according to the sixth aspect, the molar ratio Li/M may be greater than or equal to 0.96 and less than or equal to 1.20.

In the positive electrode material according to the seventh aspect, when the molar ratio Li/M of the solid electrolyte is within the above range, the lithium-ion conductivity of the solid electrolyte is further improved. Thus, the positive electrode produced by the positive electrode material according to the seventh aspect can further improve the charge and discharge efficiency of the battery.

According to an eighth aspect of the present disclosure, for example, in the positive electrode material according to any one of the first to seventh aspects, the organic solvent may contain at least one selected from the group consisting of a compound having a halogen group and a hydrocarbon.

The organic solvent containing at least one selected from the group consisting of a compound having a halogen group and a hydrocarbon is suitable as a solvent of the positive electrode material. Thus, the positive electrode material according to the eighth aspect is suitable for production of a positive electrode that can further improve the charge and discharge efficiency of the battery.

According to a ninth aspect of the present disclosure, for example, in the positive electrode material according to the eighth aspect, the compound having a halogen group may have only a halogen group as a functional group.

The compound having only a halogen group as a functional group allows easy dispersion of the oxyhalide solid electrolyte (i.e., a solid electrolyte containing O and X). Thus, the positive electrode material according to the ninth aspect is suitable for production of a positive electrode that can further improve the charge and discharge efficiency of the battery.

According to a tenth aspect of the present disclosure, for example, in the positive electrode material according to any one of the first to ninth aspects, the organic solvent may contain an aromatic compound.

The organic solvent containing an aromatic compound is suitable as a solvent of the positive electrode material. Thus, the positive electrode material according to the tenth aspect is suitable for production of a positive electrode that can further improve the charge and discharge efficiency of the battery.

According to an eleventh aspect of the present disclosure, for example, in the positive electrode material according to any one of the first to tenth aspects, the organic solvent may contain at least one selected from the group consisting of tetralin, mesitylene, xylene, cumene, pseudocumene, ethylbenzene, chlorobenzene, 2,4-dichlorobenzene, o-chlorotoluene, 1,3-dichlorobenzene, p-chlorotoluene, 1,2-dichlorobenzene, 1,4-dichlorobutane, 2,4-dichlorotoluene, and 3,4-dichlorotoluene.

The above compound that can be used as the organic solvent of the positive electrode material according to the eleventh aspect allows easy dispersion of the oxyhalide solid electrolyte. Thus, the positive electrode material according to the eleventh aspect is suitable for production of a positive electrode that can further improve the charge and discharge efficiency of the battery.

According to a twelfth aspect of the present disclosure, for example, in the positive electrode material according to the eleventh aspect, the organic solvent may contain at least one selected from the group consisting of tetralin, mesitylene, and xylene.

The above compound that can be used as the organic solvent of the positive electrode material according to the twelfth aspect allows easier dispersion of the oxyhalide solid electrolyte. Thus, the positive electrode material according to the twelfth aspect is suitable for production of a positive electrode that can further improve the charge and discharge efficiency of the battery.

According to a thirteenth aspect of the present disclosure, for example, in the positive electrode material according to any one of the first to twelfth aspects, the organic solvent may have a polar term δp of Hansen solubility parameter of less than or equal to 4.3.

The organic solvent in which a polar term δp of Hansen solubility parameter is less than or equal to 4.3 has low reactivity at the interface with other materials. Thus, in the positive electrode material according to the thirteenth aspect of the present disclosure, the reaction at the interface between the organic solvent and the other materials is reduced, resulting in lower resistance. Thus, the positive electrode material according to the thirteenth aspect is suitable for production of a positive electrode that can further improve the charge and discharge efficiency of the battery.

A method of producing a positive electrode according to a fourteenth aspect of the present disclosure comprises:
removing the organic solvent from the positive electrode material according to any one of the first to thirteenth aspects.

The production method according to the fourteenth aspect can produce a positive electrode in which an increase in resistance is reduced. Thus, the positive electrode produced by the production method according to the fourteenth aspect can reduce the increase in internal resistance of the battery, which results in improvement of the charge and discharge efficiency. Furthermore, the production method according to the fourteenth aspect can produce a positive electrode that is homogeneous and has less performance variation.

A method of producing a positive electrode plate according to a fifteenth aspect of the present disclosure comprises:
applying the positive electrode material according to any one of the first to thirteenth aspects onto a current collector; and
removing the organic solvent from the positive electrode material applied onto the current collector.

The production method according to the fifteenth aspect can produce a positive electrode plate in which an increase in resistance is reduced. Thus, the positive electrode plate produced by the production method according to the fifteenth aspect can reduce the increase in internal resistance of the battery, which results in improvement of the charge and discharge efficiency. Furthermore, the production method according to the fifteenth aspect can produce a positive electrode plate that is homogeneous and has less performance variation.

A method of producing a battery according to a sixteenth aspect of the present disclosure is a method of producing a battery including a positive electrode, a negative electrode, and a solid electrolyte layer located between the positive electrode and the negative electrode, and the method comprises:
removing the organic solvent from the positive electrode material according to any one of the first to thirteenth aspects to produce the positive electrode.

The production method according to the sixteenth aspect can produce a battery having improved charge and discharge efficiency.

Hereinafter, embodiments of the present disclosure will be described with reference to the drawings. This disclosure should not be limited to the following embodiments.

### (First Embodiment)

Hereinafter, the positive electrode material according to a first embodiment will be described.

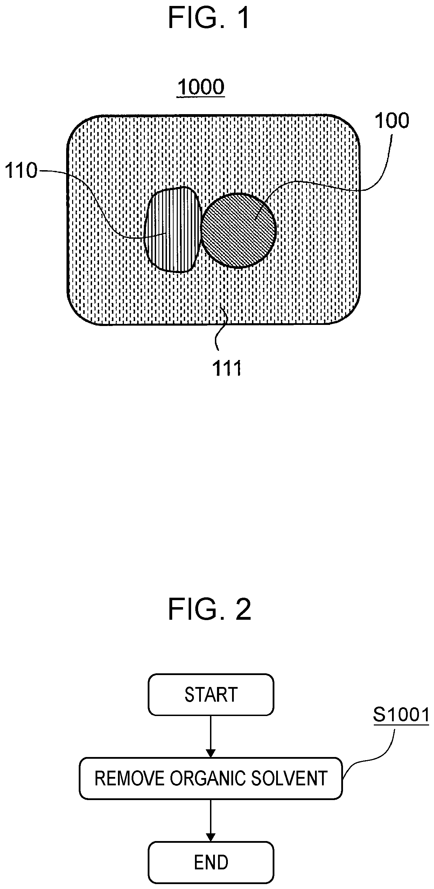

Fig. 1 is a schematic view of the positive electrode material according to the first embodiment.

The positive electrode material 1000 according to the first embodiment includes a positive electrode active material 110, a solid electrolyte 100, and an organic solvent 111. The solid electrolyte 100 contains Li, M, O, and X. Here, M is at least one selected from the group consisting of Ta and Nb, and X is at least one selected from the group consisting of F, Cl, Br, and I. In other words, the positive electrode material 1000 contains an oxyhalide solid electrolyte containing an oxygen element and a halogen element. The organic solvent 111 has a boiling point of less than or equal to 212°C,

The above configuration can provide a positive electrode material 1000 that is suitable for production of a positive electrode that can improve the charge and discharge efficiency of the battery. Specifically, a positive electrode in which an increase in resistance is reduced can be formed by using the positive electrode material 1000. Thus, in a battery including the positive electrode produced by using the positive electrode material 1000, an increase in internal resistance is reduced, and thus the battery has improved charge and discharge efficiency.

The positive electrode material 1000 may be in the form of a paste or a dispersion. In the positive electrode material 1000, the solid electrolyte 100 and the positive electrode active material 110 are, for example, particles. In the positive electrode material 1000, the solid electrolyte 100 and the positive electrode active material 110 are mixed with the organic solvent 111. The viscosity of the positive electrode material 1000 can be adjusted as appropriate. For example, when applied by a spraying method or the like, the positive electrode material 1000 has relatively low viscosity. When applied by a doctor blade method or the like, the positive electrode material 1000 has relatively high viscosity.

A ratio of the total mass of the solid electrolyte 100 and the positive electrode active material 110 to the total mass of the solid electrolyte 100, the positive electrode active material 110, and the organic solvent 111 is not particularly limited and may be less than or equal to 80% by mass, for example. This configuration allows easy application of the positive electrode material 1000 onto a surface of the current collector.

### (Positive Electrode Active Material)

The positive electrode active material 110 contains a material capable of occluding and releasing of metal ions (for example, lithium ions). Examples of the positive electrode active material 110 include lithium-containing transition metal oxides, transition metal fluorides, polyanionic materials, fluorinated polyanionic materials, transition metal sulfides, transition metal oxysulfides, and transition metal oxynitrides. Examples of the lithium-containing transition metal oxides include Li(Ni,Co,Al)O₂, Li(Ni,Co,Mn)O₂, and LiCoO₂. In particular, when a lithium-containing transition metal oxide is used as the positive electrode active material 110, the production cost of the positive electrode can be lowered, and the average discharge voltage can be increased.

The positive electrode active material 110 may contain Ni, Co, and Mn. The positive electrode active material 110 may contain lithium nickel cobalt manganese oxide. For example, the positive electrode active material 110 may contain Li(Ni,Co,Al)O₂.

With the above configuration, the positive electrode material 1000 can further increase the energy density and the charge and discharge efficiency of the battery including the positive electrode produced by using the positive electrode material 1000.

At least a portion of the surface of the positive electrode active material 110 may be covered by a coating material different from the positive electrode active material 110.

Examples of the coating material include Li-Nb-O compounds such as LiNbO₃, Li-B-O compounds such as LiBO₂ and Li₃BO₃, Li-Al-O compounds such as LiAlO₂, Li-Si-O compounds such as Li₄SiO₄, Li-Ti-O compounds such as Li₂SO₄ and Li₄Ti₅O₁₂, Li-Zr-O compounds such as Li₂ZrO₃, Li-Mo-O compounds such as Li₂MoO₃, Li-V-O compounds such as LiV₂O₅, Li-W-O compounds such as Li₂WO₄, and Li-P-O compounds such as Li₃PO₄.

When the positive electrode material 1000 contains the positive electrode active material 110 having the above configuration, oxidation of the solid electrolyte 100 in the positive electrode produced by using the positive electrode material 1000 can be reduced.

At least a portion of the surface of the positive electrode active material 110 may be covered by an oxyhalide solid electrolyte. When the positive electrode material 1000 contains the positive electrode active material 110 having the above configuration, the interface resistance in the positive electrode produced by using the positive electrode material 1000 can be reduced.

The median diameter of the positive electrode active material 110 may be greater than or equal to 0.1 µm and less than or equal to 100 µm. When the median diameter of the positive electrode active material is greater than or equal to 0.1 µm, the positive electrode active material 110 and the solid electrolyte 100 can be favorably dispersed in the positive electrode material 1000. Thus, the battery including the positive electrode produced by using the positive electrode material 1000 can have higher charge and discharge properties. When the median diameter of the positive electrode active material 110 is less than or equal to 100 µm, the lithium diffusion rate in the positive electrode active material is accelerated. Thus, the battery including the positive electrode produced by using the positive electrode material 1000 can operate with a high output.

In this specification, the median diameter of the positive electrode active material 110 means a particle diameter (d50) at a cumulative volume of 50% in a volume-based particle size distribution determined by a laser diffraction scattering method. The particle size distribution can also be determined, for example, using an image analyzer. The same holds for the median diameters of other materials.

### (Solid Electrolyte)

The solid electrolyte 100 contains Li, M, O, and X. X is at least one selected from the group consisting of F, Cl, Br, and I. In other words, the positive electrode material 1000 contains an oxyhalide solid electrolyte. The oxyhalide solid electrolyte can have lithium-ion conductivity, for example.

In the solid electrolyte 100, X may include Cl. X1 may be Cl. The solid electrolyte 100 that contains Cl can have high ion conductivity. Thus, when the positive electrode material 1000 contains a solid electrolyte containing Cl, a battery including the positive electrode produced by using the positive electrode material 1000 can have higher charge and discharge efficiency. In other words, the above configuration can provide a positive electrode material 1000 suitable for production of a positive electrode that can further improve the charge and discharge efficiency of the battery. X may include Cl and at least one selected from the group consisting of F, Br, and I.

In the solid electrolyte 100, M is at least one selected from the group consisting of Ta and Nb. The solid electrolyte 100 that contains at least one selected from the group consisting of Ta and Nb can have high ion conductivity. Thus, when containing the solid electrolyte 100 having such a configuration, the positive electrode material 1000 can form a positive electrode having high lithium-ion conductivity. Thus, the above configuration can provide a positive electrode material 1000 suitable for production of a positive electrode that can further improve the charge and discharge efficiency of the battery.

More specifically, the solid electrolyte 100 may contain at least one selected from the group consisting of a material containing Li, Ta, O, and Cl, a material containing Li, Nb, O, and Cl, and a material containing Li, Ta, Nb, O, and Cl. The solid electrolyte 100 may be a material containing Li, Ta, O, and Cl, a material containing Li, Nb, O, and Cl, or a material containing Li, Ta, Nb, O, and Cl. The solid electrolyte 100 does not have to contain sulfur.

In the solid electrolyte 100, the molar ratio of O to X, O/X, may be greater than or equal to 0.16 and less than or equal to 0.35. For example, when X is Cl, the molar ratio of O to Cl, O/Cl, may be greater than or equal to 0.16 and less than or equal to 0.35. When X contains multiple halogen elements, the number of moles of X is the sum of the numbers of moles of those multiple halogen elements. When the molar ratio O/X of the solid electrolyte 100 is within the above range, the solid electrolyte 100 can readily have a high conductive crystalline phase. This further improves the lithium-ion conductivity of the solid electrolyte 100 in the positive electrode material 1000. Thus, the positive electrode produced by using the positive electrode material 1000 can further improve the charge and discharge efficiency of the battery.

In the solid electrolyte 100, the molar ratio of Li to M, Li/M, may be greater than or equal to 0.60 and less than or equal to 2.4. That is, the ratio Li/(Ta+Nb) of the number of moles of Li to the sum of the numbers of moles of Ta and Nb may be greater than or equal to 0.6 and less than or equal to 2.4. When the molar ratio Li/M of the solid electrolyte 100 is within the above range, the concentration of Li as a conduction carrier in the solid electrolyte 100 can be optimized. This further improves the lithium-ion conductivity of the solid electrolyte 100 in the positive electrode material 1000. Thus, the positive electrode produced by using the positive electrode material 1000 can further improve the charge and discharge efficiency of the battery.

In the solid electrolyte 100, the molar ratio of Li to M, Li/M, may be greater than or equal to 0.96 and less than or equal to 1.20. In other words, the ratio Li/(Ta+Nb) of the number of moles of Li to the sum of the numbers of moles of Ta and Nb may be greater than or equal to 0.96 and less than or equal to 1.20. When the molar ratio Li/M of the solid electrolyte 100 is within the above range, the concentration of Li as a conduction carrier in the solid electrolyte 100 can be further optimized. This further improves the lithium-ion conductivity of the solid electrolyte 100 in the positive electrode material 1000. Thus, the positive electrode produced by using the positive electrode material 1000 can further improve the charge and discharge efficiency of the battery.

The solid electrolyte 100 may have a crystalline phase in which at least one peak exists in a diffraction angle 2θ range of greater than or equal to 11.05° and less than or equal to 13.86° in the X-ray diffraction pattern obtained by X-ray diffraction measurement using Cu-Kα radiation as a radiation source. When the solid electrolyte 100 has such a crystalline phase, paths that allow dispersion of lithium ions in the solid electrolyte 100 are readily formed. Thus, when containing the solid electrolyte 100 having such a crystalline phase, the positive electrode material 1000 can form a positive electrode having high lithium-ion conductivity. In other words, the positive electrode produced by using the positive electrode material 1000 can further improve the charge and discharge efficiency of the battery.

The shape of the solid electrolyte 100 is not particularly limited. When the solid electrolyte 100 is a powder, the shape may be, for example, acicular, spherical, or ellipsoidal. For example, the shape of the solid electrolyte 100 may be particulate.

For example, when the shape of the solid electrolyte 100 is particulate (e.g., spherical), the median diameter of the solid electrolyte 100 may be less than or equal to 100 µm. When the median diameter is less than or equal to 100 µm, the solid electrolyte 100 can be favorably dispersed in the positive electrode material 1000. Thus, the positive electrode produced by using the positive electrode material 1000 can further improve the charge and discharge efficiency of the battery.

The median diameter of the solid electrolyte 100 may be less than or equal to 10 µm. When the median diameter is less than or equal to 10 µm, the solid electrolyte 100 can be favorably dispersed in the positive electrode material 1000. Thus, the positive electrode produced by using the positive electrode material 1000 can further improve the charge and discharge efficiency of the battery.

The median diameter of the solid electrolyte 100 may be smaller than the median diameter of the positive electrode active material 110. This enables the positive electrode active material 110 and the solid electrolyte 100 to be favorably dispersed in the positive electrode material 1000.

### (Organic Solvent)

As described above, the organic solvent 111 has a boiling point of less than or equal to 212°C. The positive electrode material 1000 that contains the organic solvent 111 can form a positive electrode in which a residual solvent is reduced. In the positive electrode produced in this way, an increase in resistance caused by a residual solvent is reduced. Thus, the positive electrode material 1000 is suitable for production of a positive electrode that can improve the charge and discharge efficiency of the battery. In this specification, a "boiling point" means the temperature at which the saturation vapor pressure of a liquid equals 1 atm.

The organic solvent 111 may have a boiling point of less than or equal to 208°C. The positive electrode material 1000 that contains the organic solvent 111 can form a positive electrode in which a residual solvent is further reduced. In the positive electrode produced in this way, an increase in resistance caused by a residual solvent is further reduced. Thus, the positive electrode material 1000 that contains the organic solvent 111 having such a boiling point is suitable for production of a positive electrode that can further improve the charge and discharge efficiency of the battery.

The organic solvent 111 may contain at least one selected from the group consisting of a compound having a halogen group and a hydrocarbon. These are suitable as solvents for the positive electrode material 1000. Thus, the positive electrode material 1000 containing such a solvent is suitable for production of a positive electrode that can further improve the charge and discharge efficiency of the battery.

The hydrocarbon is a compound consisting solely of carbon and hydrogen. The hydrocarbon may be an aliphatic hydrocarbon. The hydrocarbon may be a saturated hydrocarbon or an unsaturated hydrocarbon. The hydrocarbon may be linear or branched. The number of carbons in the hydrocarbon is not particularly limited and may be greater than or equal to 7. The use of hydrocarbon enables production of a positive electrode material 1000 having high dispersibility.

The hydrocarbon may have a cyclic structure. The cyclic structure may be an alicyclic hydrocarbon or an aromatic hydrocarbon. The cyclic structure may be monocyclic or polycyclic. The cyclic structure of the hydrocarbon allows easy dispersion of the solid electrolyte 100 in the organic solvent 111. To enhance the dispersibility of the solid electrolyte 100 in the positive electrode material 1000, the hydrocarbon may contain an aromatic hydrocarbon. The hydrocarbon may be an aromatic hydrocarbon.

In the compound having a halogen group, a portion other than the halogen group may consist solely of carbon and hydrogen. In other words, the compound having a halogen group means a compound in which at least one of the hydrogen atoms in the hydrocarbon is replaced by a halogen group. Examples of the halogen group include F, Cl, Br, and I. At least one or at least two selected from the group consisting of F, Cl, Br, and I may be used as the halogen group. The compound having a halogen group can have a high polarity. When a compound having a halogen group is used as the organic solvent 111, the solid electrolyte 100 in the positive electrode material 1000 can have higher dispersibility. Thus, the positive electrode material 1000 can form a denser positive electrode.

The number of carbons in the compound having a halogen group is not particularly limited and may be greater than or equal to 7. With this configuration, the compound having a halogen group is less likely to volatize, enabling stable production of the positive electrode material 1000. In addition, the compound having a halogen group can have a large molecular weight. In other words, the compound having a halogen group can have a high boiling point.

The compound having a halogen group may have only a halogen group as a functional group. In this case, the number of halogens in the compound having a halogen group is not particularly limited. At least one or at least two selected from the group consisting of F, Cl, Br, and I may be used as the halogen. When such a compound is used as the organic solvent 111, the solid electrolyte can be readily dispersed, enabling production of the positive electrode material 1000 having high dispersibility. Thus, the positive electrode material 1000 can form a denser positive electrode. When such a compound is used as the organic solvent 111, the positive electrode material 1000 can readily form a dense positive electrode having few pinholes and irregularities, for example.

The compound having a halogen group may be a halogenated hydrocarbon. The halogenated hydrocarbon means a compound in which all the hydrogens in the hydrocarbon are replaced by halogen groups. When the halogenated hydrocarbon is used as the organic solvent 111, the solid electrolyte 100 can be readily dispersed, enabling production of the positive electrode material 1000 having high dispersibility. Thus, the positive electrode material 1000 can form a denser positive electrode. When the halogenated hydrocarbon is used as the organic solvent 111, the positive electrode material 1000 can readily form a dense positive electrode having few pinholes and irregularities, for example.

The organic solvent 111 may, for example, contain an aromatic compound.

The organic solvents 111 may contain, for example, at least one selected from the group consisting of tetralin, mesitylene, xylene, cumene, pseudocumene, ethylbenzene, chlorobenzene, 2,4-dichlorobenzene, o-chlorotoluene, 1,3-dichlorobenzene, p-chlorotoluene, 1,2-dichlorobenzene, 1,4-dichlorobutane, 2,4-dichlorotoluene, and 3,4-dichlorotoluene. These compounds allow easy dispersion of the oxyhalide solid electrolyte. Thus, when these compounds are used as the organic solvents 111, the positive electrode material 1000 can form a denser positive electrode. Such a positive electrode can further improve the charge and discharge efficiency of the battery.

The organic solvent 111 may, for example, contain at least one selected from the group consisting of tetralin, mesitylene, and xylene. These compounds allow easier dispersion of the oxyhalide solid electrolyte. Thus, when these compounds are used as the organic solvents 111, the positive electrode material 1000 can form a denser positive electrode. Such a positive electrode can further improve the charge and discharge efficiency of the battery.

The number of halogen groups in the compound having a halogen group is not particularly limited. The number of halogen groups in the compound having a halogen group may be one, for example.

The lower limit of the boiling point of the organic solvent 111 may be, for example, greater than or equal to 100°C from the viewpoint of stability of the positive electrode material 1000. The organic solvent 111 may be a liquid at room temperature (25°C). Such an organic solvent 111 is less likely to volatilize at room temperature and thus the positive electrode material 1000 cab be stably produced. Thus, the positive electrode material that can be readily applied to the surface of an electrode or a current collector is produced. Furthermore, this enables the organic solvent 111 to be readily removed by drying. The organic solvent 111 can be a liquid that allows dispersion of the oxyhalide solid electrolyte. The organic solvent 111 does not have to dissolve the oxyhalide solid electrolyte.

The organic solvent 111 may have a polar term δp of Hansen solubility parameter of less than or equal to 4.3. When the organic solvent 111 has a polar term δp of Hansen solubility parameter of less than or equal to 4.3, the reactivity at the interface between the organic solvent 111 and other materials, such as the solid electrolyte 100 and the positive electrode active material 110, is low. Thus, in the positive electrode material 1000, the reaction at the interface between the organic solvent 111 and other materials is reduced, enabling the resistance to be lowered. Thus, the positive electrode material 1000 containing the organic solvent 111 that satisfies the above Hansen solubility parameters is suitable for production of a positive electrode that can further improve the charge and discharge efficiency of the battery.

### (Other Components)

The positive electrode material 1000 may contain a binder to enhance adhesion between the particles. The binder is used to improve the binding properties of the materials that constitute the electrode. Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyethersulfone, hexafluoropropylene, styrene-butadiene rubber, and carboxymethylcellulose. Furthermore, the binder may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. Furthermore, a mixture of two or more materials selected from the above may be used.

The positive electrode material 1000 may contain a conductive additive to increase electronic conductivity. Examples of the conductive additive include graphites such as natural graphite and artificial graphite, carbon blacks such as acetylene black and Ketjen black, conductive fibers such as carbon fibers and metal fibers, fluorocarbons, metal powders such as aluminum, conductive whiskers such as zinc oxide and potassium titanate, conductive metal oxides such as titanium oxide, and conductive polymer compounds such as polyaniline, polypyrrole, and polythiophene. When a carbon conductive additive is used as a conductive additive, the cost can be lowered.

The positive electrode material 1000 may contain a dispersant to improve the dispersibility of the solid electrolyte 100 or the positive electrode active material 110.

### (Second Embodiment)

Hereinafter, a method of producing a positive electrode according to a second embodiment will be described. The same details as those in the first embodiment are omitted as appropriate.

Fig. 2 is a flowchart indicating an example of a method of producing a positive electrode according to the second embodiment. The method of producing a positive electrode according to the second embodiment includes a step S1001 of removing the organic solvent 111 from the positive electrode material 1000 according to the above-described first embodiment. In other words, the positive electrode is a component that contains the solid electrolyte 100 and the positive electrode active material 110.

Removing the organic solvent 111 from the positive electrode material 1000, which contains the solid electrolyte 100, the positive electrode active material 110, and the organic solvent 111, can produce, for example, a homogeneous positive electrode. Furthermore, as explained in the first embodiment, the positive electrode material 1000 can form a positive electrode in which a residual solvent is reduced. Thus, in the positive electrode produced by the production method according to the second embodiment, the increase in resistance caused by a residual solvent is reduced. Thus, in a battery including such a positive electrode, an increase in internal resistance is reduced, and thus the battery has improved charge and discharge efficiency. In other words, the positive electrode produced by the production method according to the second embodiment can reduce an increase in internal resistance of the battery and improve the charge and discharge efficiency.

At the step S1001, the organic solvent 111 is removed from the positive electrode material 1000. The organic solvent 111 may be removed, for example, by ambient pressure drying. The removal of the organic solvent 111 by ambient pressure drying means removal of the organic solvent 111 from the positive electrode material 1000 under atmospheric pressure atmosphere. In the ambient pressure drying, the positive electrode material 1000 may be heated, for example, to greater than or equal to 100°C and less than or equal to 200°C.

At the step S1001, the organic solvent 111 may be removed from the positive electrode material 1000 by, for example, decompression drying. The positive electrode material 1000 before removal of the organic solvent 111 has fluidity. Thus, the positive electrode material 1000 has high formability and can form, for example, a coating film having a uniform thickness. When such a coating film is dried, a dense positive electrode having few pinholes and irregularities, for example, can be readily produced.

The removal of the organic solvent 111 by decompression drying means removal of the organic solvent 111 from the positive electrode material 1000 under a pressure lower than atmospheric pressure. The pressure lower than atmospheric pressure may be, for example, a gauge pressure of less than or equal to -0.01 MPa. In decompression drying (drying under reduced pressure), the positive electrode material 1000 may be heated to, for example, greater than or equal to 100°C and less than or equal to 200°C.

The organic solvent 111 may be removed from the positive electrode material 1000 by vacuum drying. The removal of the organic solvent 111 by vacuum drying means, for example, removal of the organic solvent 111 from the positive electrode material 1000 at a temperature equal to the boiling point of the organic solvent 111 minus 20°C under a pressure not higher than the vapor pressure.

The removal of the organic solvent 111 can be confirmed by, for example, Fourier transform infrared spectroscopy (FT-IR), X-ray photoelectron spectroscopy (XPS), gas chromatography (GC), or gas chromatography mass spectrometry (GC/MS). The organic solvent 111 does not need to be completely removed if the positive electrode produced by drying has ion conductivity.

### (Third Embodiment)

Hereinafter, a method of producing a positive electrode plate according to a third embodiment will be described. The same details as those in the first and second embodiments are omitted as appropriate.

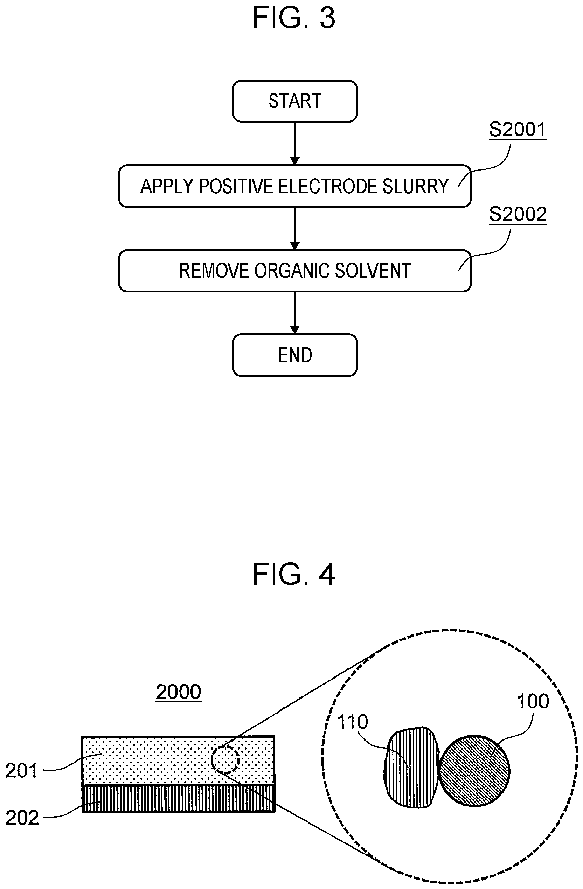

Fig. 3 is a flowchart indicating an example of a method of producing a positive electrode plate according to the third embodiment. The method of producing a positive electrode plate according to the third embodiment includes a step S2001 of applying the positive electrode material 1000 according to the above-described first embodiment onto a current collector, and a step S2002 of removing the organic solvent 111 from the positive electrode material 1000 applied onto the current collector.

Fig. 4 is a cross-sectional view illustrating a schematic configuration of the positive electrode plate produced by the method of producing a positive electrode plate according to the third embodiment. As illustrated in Fig. 4, a positive electrode plate 2000 includes a positive electrode 201 and a current collector 202. The positive electrode 201 contains the positive electrode active material 110 and the solid electrolyte 100.

In the production method according to the third embodiment, at the step S2001, for example, the positive electrode material 1000 is applied onto the current collector 202 as a base to form a film of the positive electrode material 1000. At the step S2002, the organic solvent 111 is removed from the film of the positive electrode material 1000, and thus, for example, a homogeneous positive electrode 201 can be produced.

The material of the current collector 202 can be any electron conductive material, and examples of the material include metals, semi-metals, and alloys that are mixtures thereof.

Specifically, the examples include carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), aluminum (Al), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), silver (Ag), gold (Au), and platinum (Pt). Preferable examples thereof include carbon (C), iron (Fe), nickel (Ni), aluminum (Al), and copper (Cu). Alloys of these metals may also be used.

The material of the current collector 202 may be an aluminum alloy. Examples of the aluminum alloy include, as defined by Japanese industrial standards (e.g. JIS H4000), pure aluminum such as A1050 (Al content: greater than or equal to 99.50 wt%, Fe: less than or equal to 0.40 wt%, Si: less than or equal to 0.25 wt%, Cu: less than or equal to 0.05 wt%) and A1085 (Al content: greater than or equal to 99.85 wt%, Fe: less than or equal to 0.12 wt%, Si: less than or equal to 0.1 wt%, Cu: less than or equal to 0.03 wt%) and reinforced aluminum alloys such as A2017 (Al-Cu alloy containing 3.5 to 4.5 wt% of Cu), A3003 (Al-Mn-Cu alloy containing 1.0 to 1.5 wt% of Mn and 0.05 to 0.20 of Cu), and A8021 (Al-Fe-Cu alloy containing 1.5 wt% of Fe and 0.05 wt% of Cu). The current collector 202 that contains an aluminum alloy is lightweight and has high strength, enabling production of a battery having both high gravimetric energy density and high durability.

The material of the current collector 202 may also be a polymeric material including the above-described electron conductive materials.

The inner portion of the current collector 202 and the surface of the current collector 202 may be composed of different materials. In other words, the surface of the inner portion of the current collector 202 may be covered by the above-described electron conductive material.

The shape of the current collector 202 is not limited, but the current collector 202 may be formed of a material having a large surface roughness, for example, to have higher adhesion to the positive electrode 201.

### (Fourth Embodiment)

A method of producing a battery according to a fourth embodiment will be described below. The same details as those in the first, second, and third embodiments are omitted as appropriate.

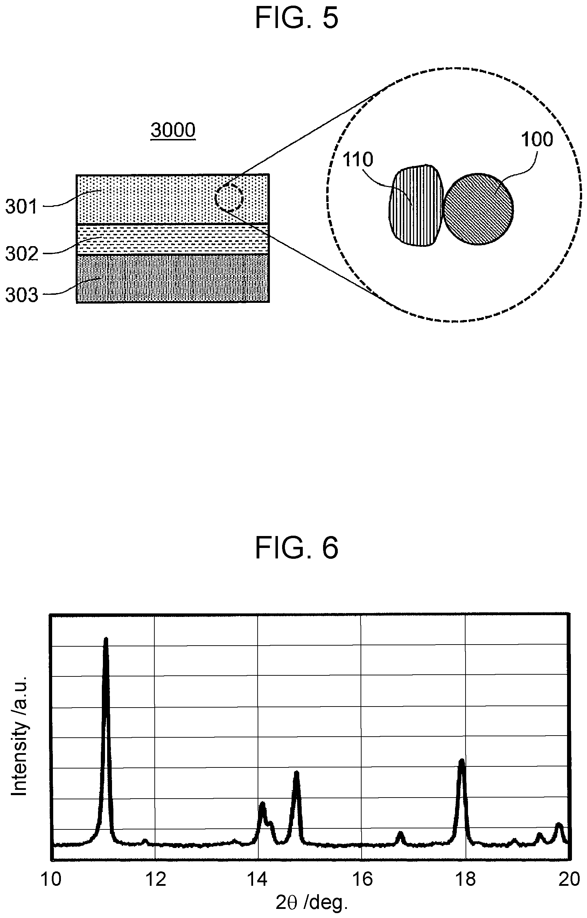

Fig. 5 is a cross-sectional view of a battery produced by the method of producing a battery according to the fourth embodiment. As illustrated in Fig. 5, a battery 3000 produced by the production method according to the fourth embodiment includes a positive electrode 301, a negative electrode 303, and an electrolyte layer 302 located between the positive electrode 301 and the negative electrode 303. The positive electrode 301 contains the positive electrode active material 110 and the solid electrolyte 100. The method of producing a battery according to the fourth embodiment includes the step of removing the organic solvent 111 from the positive electrode material 1000 according to the above-described first embodiment to produce the positive electrode 301. In other words, the method of producing a battery according the fourth embodiment may employ the method of producing a positive electrode described in the above-described second embodiment or the method of producing a positive electrode plate described in the above-described third embodiment in the production of the positive electrode 301.

In the method of producing a battery according to the fourth embodiment, the positive electrode material 1000 described in the first embodiment is used to produce the positive electrode 301. Thus, the positive electrode 301 produced by the production method according to the fourth embodiment is a positive electrode in which a residual solvent is reduced and an increase in resistance is reduced. Thus, the production method according to the fourth embodiment can produce the battery 3000 having improved charge and discharge efficiency.

The positive electrode 301 contains the positive electrode active material 110 and the solid electrolyte 100.

The volume ratio of "v1:100-v1" between the positive electrode active material 110 and the solid electrolyte 100 in the positive electrode 301 may satisfy 30 ≤ v1 ≤ 98. Here, v1 represents the volume ratio of the positive electrode active material 110, with the total volume of the positive electrode active material 110 and the solid electrolyte 100 in the positive electrode 301 being taken as 100. If 30 ≤ v1 is satisfied, the battery 3000 can have sufficient energy density. When v1 ≤ 95 is satisfied, the battery 3000 can operate with a high output.

The thickness of the positive electrode 301 may be greater than or equal to 10 µm and less than or equal to 500 µm. When the thickness of the positive electrode 301 is greater than or equal to 10 µm, the battery 3000 has sufficient energy density. When the thickness of the positive electrode 301 is less than or equal to 500 µm, the battery 3000 can operate with a high output.

The electrolyte layer 302 is a layer containing an electrolyte.

The solid electrolyte in the electrolyte layer 302 may be an oxyhalide solid electrolyte. As the solid electrolyte contained in the electrolyte layer 302, an oxyhalide solid electrolyte having the same composition or the same crystalline phase as the solid electrolyte 100 contained in the positive electrode material 1000 in the first embodiment may be used. The above configuration can further improve the power density and the charge and discharge properties of the battery 3000.

Furthermore, the solid electrolyte contained in the electrolyte layer 302 may be a halide solid electrolyte having a different composition or a different crystalline phase than the oxyhalide solid electrolyte in the first embodiment.

The solid electrolyte in the electrolyte layer 302 may be a halide solid electrolyte. The halide solid electrolyte here means a solid electrolyte that contains a halogen element and does not contain sulfur. In this disclosure, a sulfur-free solid electrolyte means a solid electrolyte represented by a formula that does not contain a sulfur element. Thus, solid electrolytes having a very small amount of sulfur components, e.g., less than or equal to 0.1% by mass of sulfur, are included in the sulfur-free solid electrolytes. The halide solid electrolyte may further contain oxygen as an anion other than the halogen element.

The solid electrolyte contained in the electrolyte layer 302 may be a sulfide solid electrolyte, an oxide solid electrolyte, a polymeric solid electrolyte, or a complex hydride solid electrolyte.

When the solid electrolyte contained in the electrolyte layer 302 is a sulfide solid electrolyte, the sulfide solid electrolyte may be, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂. For example, LiX, Li₂O, MO_{q}, or LiₚMO_{q} may be added to the above. The element X in "LiX" is at least one element selected from the group consisting of F, Cl, Br, and I. The element M in "MO_{q}" and "LiₚMO_{q}" is at least one element selected from the group consisting of P, Si, Ge, B, Al, Ga, In, Fe, and Zn. Each of p and q in "MO_{q}" and "LiₚMO_{q}" is an independent natural number.

The above configuration in which the electrolyte layer 302 contains a sulfide solid electrolyte having high reduction stability allows the use of a low-potential negative electrode material such as graphite and metallic lithium, and thus the battery 3000 can have the improved energy density.

When the solid electrolyte contained in the electrolyte layer 302 is an oxide solid electrolyte, examples of the oxide solid electrolyte include, for example, NASICON-type solid electrolytes represented by LiTi₂(PO₄)₃ and element substitution products thereof, (LaLi)TiO₃-based perovskite solid electrolytes, LISICON-type solid electrolytes represented by Li₁₄ZnGe₄O₁₆, Li₄SiO₄, LiGeO₄, and element substitution products thereof, garnet-type solid electrolytes represented by Li₇La₃Zr₂O₁₂ and element substitution products thereof, Li₃N and H-substitution products thereof, Li₃PO₄ and N-substitution products thereof, and glass or glass ceramic in which a material such as Li₂SO₄ and Li₂CO₃ is added to a Li-B-O compound such as LiBO₂ and Li₃BO₃ used as a base.

When the solid electrolyte contained in the electrolyte layer 302 is a polymeric solid electrolyte, the polymeric solid electrolyte may be, for example, a compound of a polymer compound and a lithium salt. The polymer compound may have an ethylene oxide structure. The polymer compound having the ethylene oxide structure can contain a large amount of lithium salt. This can further improve the ion conductivity. Examples of the lithium salt may include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. One lithium salt selected from these lithium salts may be used alone, or a mixture of two or more lithium salts selected from these lithium salts may be used.

When the solid electrolyte contained in the electrolyte layer 302 is a complex hydride solid electrolyte, examples of the complex hydride solid electrolyte may include LiBH₄-LiI and LiBH₄-P₂S₅.

The electrolyte layer 302 may contain a solid electrolyte as a main component. In other words, the electrolyte layer 302 may contain the solid electrolyte, for example, in a mass ratio of greater than or equal to 50% (i.e., greater than or equal to 50% by mass) to the whole electrolyte layer 302.

The above configuration can further improve the charge and discharge properties of the battery 3000.

The electrolyte layer 302 may contain the solid electrolyte, for example, in a mass ratio of greater than or equal to 70% (i.e., greater than or equal to 70% by mass) to the whole electrolyte layer 302.

The above configuration can further improve the charge and discharge properties of the battery 3000.

The electrolyte layer 302 containing the solid electrolyte as a main component may further contain inevitable impurities, starting raw materials used in synthesis of the solid electrolyte, by-products, degraded products, or the like.

The electrolyte layer 302 may contain the solid electrolyte in a mass ratio of 100% (i.e., 100% by mass) to the whole electrolyte layer 302, excluding, for example, inevitable impurities.

The above configuration can further improve the charge and discharge properties of the battery 3000.

As described above, the electrolyte layer 302 may consist solely of a solid electrolyte.

The electrolyte layer 302 may contain two or more of the materials listed as the examples of the solid electrolyte contained in the electrolyte layer 302. For example, the electrolyte layer 302 may contain a halide solid electrolyte and a sulfide solid electrolyte.

The thickness of the electrolyte layer 302 may be greater than or equal to 1 µm and less than or equal to 300 µm. When the thickness of the electrolyte layer 302 is greater than or equal to 1 µm, a short circuit is less likely to occur between the positive electrode 301 and the negative electrode 303. When the thickness of the electrolyte layer 302 is less than or equal to 300 µm, the battery 3000 can operate with a high output.

The negative electrode 303 contains a material capable of occluding and releasing of metal ions (for example, lithium ions). The negative electrode 303 contains, for example, a negative electrode active material.

Examples of the negative electrode active material may include metal materials, carbon materials, oxides, nitrides, tin compounds, and silicon compounds. The metal material may be an elemental metal. Alternatively, the metal material may be an alloy. Examples of the metal material include a lithium metal and a lithium alloy. Examples of the carbon material include natural graphite, coke, graphitizing carbon, carbon fibers, spherical carbon, artificial graphite, and amorphous carbon. From the viewpoint of capacity density, silicon (Si), tin (Sn), a silicon compound, or a tin compound may be used.

The negative electrode 303 may contain a solid electrolyte. As the solid electrolyte, the materials listed as the examples of the material constituting the electrolyte layer 302 may be used. The above configuration can improve the lithium-ion conductivity in the negative electrode 303, enabling the battery 3000 to operate with a high output.

The median diameter of the particles of the negative electrode active material may be greater than or equal to 0.1 µm and less than or equal to 100 µm. When the median diameter of the particles of the negative electrode active material is greater than or equal to 0.1 µm, the negative electrode active material and the solid electrolyte can be favorably dispersed in the negative electrode. This improves the charge and discharge properties of the battery 3000. When the median diameter of the particles of the negative electrode active material is less than or equal to 100 µm, lithium diffusion in the negative electrode active material is accelerated. This enables the battery 3000 to operate with a high output.

The median diameter of the particles of the negative electrode active material may be larger than the median diameter of the solid electrolyte particles contained in the negative electrode 303. This enables the particles of the negative electrode active material and the particles of the solid electrolyte to be favorably dispersed.

The volume ratio "v2: 100-v2" of the negative electrode active material to the solid electrolyte in the negative electrode 303 may satisfy 30 ≤ v2 ≤ 95. Here, v2 represents the volume ratio of the negative electrode active material, with the total volume of the negative electrode active material and the solid electrolyte in the negative electrode 303 being taken as 100. When 30 ≤ v2 is satisfied, the battery 3000 can have a sufficient energy density. When v2 ≤ 95 is satisfied, the battery 3000 can operate with a high output.

The thickness of the negative electrode 303 may be greater than or equal to 10 µm and less than or equal to 500 µm. When the thickness of the negative electrode 303 is greater than or equal to 10 µm, the battery 3000 can have a sufficient energy density. When the thickness of the negative electrode 303 is less than or equal to 500 µm, the battery 3000 can operate with a high output.

At least one of the positive electrode 301, the electrolyte layer 302, or the negative electrode 303 may contain a binder to improve adhesion between the particles. The binder is used to improve the binding properties of the materials that constitute the electrode. Examples of the binder include polyvinylidene fluoride, polytetrafluoroethylene, polyethylene, polypropylene, an aramid resin, polyamide, polyimide, polyimide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymetachrylic acid ethyl ester, polymethacrylic acid hexyl ester, polyvinyl acetate, polyvinylpyrrolidone, polyether, polyethersulfone, hexafluoropolypropylene, styrene butadiene rubber, and carboxymethyl cellulose. Furthermore, the binder may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. Alternatively, a mixture of two or more selected from the above materials may also be used.

At least one of the positive electrode 301 or the negative electrode 303 may contain a conductive additive to improve the electronic conductivity. Examples of the conductive additive include graphites such as natural graphite and artificial graphite, carbon blacks such as acetylene black and Ketjen black, conductive fibers such as carbon fibers and metal fibers, fluorocarbons, metal powders such as aluminum, conductive whiskers such as zinc oxide and potassium titanate, conductive metal oxides such as titanium oxide, and conductive polymer compounds such as polyaniline, polypyrrole, and polythiophene. When a carbon conductive additive is used as a conductive additive, the cost can be lowered.

At least one of the positive electrode 301, the electrolyte layer 302, or the negative electrode 303 may contain a dispersant to improve the dispersibility of the components.

The battery 3000 may be embodied in various shapes such as a coin-like shape, a cylindrical shape, a rectangular shape, a sheet-like shape, a button-like shape, a flat shape, and a multilayer shape.

### EXAMPLES

Hereinafter, the present disclosure will be described in detail with reference to Examples and Comparative Example.

### [Preparation of Solid Electrolyte]

In an argon atmosphere, Li₂O₂ and TaCl₅ as raw materials were weighed to be in a molar ratio of Li₂O₂:TaCl₅ = 1:2. Then, it was subjected to a milling treatment at 600 rpm for 12 hours by using a planetary ball mill (Model P-7 produced by Fritsch). It was further subjected to a treatment at 200°C for 3 hours to produce the solid electrolytes of Examples 1 to 3 and Comparative Example 1 having a crystalline phase including Li, Ta, O, and Cl. The X-ray diffraction patterns of the produced solid electrolytes were measured using an X-ray diffractometer (Rigaku Corporation, MiniFlex 600). The X-ray diffraction patterns were measured by the θ-2θ method using Cu-Kα radiation (wavelengths of 1.5405 Å and 1.5444 Å) as the X-ray source. Fig. 6 is a graph indicating the X-ray diffraction patterns of the solid electrolytes of Examples 1 to 3 and Comparative Example 1. As indicated in Fig. 6, the solid electrolytes of Examples 1 to 3 and Comparative Example 1 had a peak at a diffraction angle 2θ = 11.08°, i.e., at least one peak in the diffraction angle 2θ range of greater than or equal to 11.05° and less than or equal to 13.86°. Hereinafter, the solid electrolyte including Li, Ta, O, and Cl is referred to as LTOC.

### [Preparation of Positive Electrode Material]

LTOC was provided as the solid electrolyte, and lithium nickel cobalt aluminum oxide (hereinafter referred to as NCA) was provided as the positive electrode active material. LTOC, NCA, a conductive additive, and a binder were put in a commercially available polypropylene container, to which an organic solvent was added and stirred with an ultrasonic homogenizer. The amount of the organic solvent was adjusted so that the solid content ratio of the resulting positive electrode material was 76.5%. Carbon fiber (VGCF-H) was used as a conductive additive. SBR (styrene butadiene rubber) was used as a binder. VGCF is a registered trademark of Showa Denko K.K.

### [Removal of Organic Solvent by Drying]

An aluminum foil (15 µm thick) was used as a current collector. The current collector was coated with the positive electrode material and then placed on a hot plate, followed by removal of the organic solvents in an argon atmosphere. Drying conditions were as follows: provisional drying at 50°C for 30 minutes, followed by main drying at 110°C for 30 minutes. Removal of the organic solvent was checked visually. When the positive electrode plate was determined to be produced visually, it was judged as "dried".

### [Battery Production]

In an insulating outer cylinder, a sulfide solid electrolyte Li₂S-P₂S₅ in an amount corresponding to 550 µm thick (about 80 mg) and a positive electrode plate were stacked in this order. The positive electrode plate was positioned with the positive electrode of the positive electrode plate facing the sulfide solid electrolyte. A dried electrode plate was punched out to have a diameter of 9.4 mm and stacked as the positive electrode.

Next, a metal Li was stacked on the opposite side of the solid electrolyte layer from the side in contact with the positive electrode. This was pressurized at a pressure of 80 MPa to produce a stack including the positive electrode, the electrolyte layer, and the negative electrode.

Next, a stainless-steel current collector was placed on and under the stack, and current collection leads were attached to the current collectors.

Finally, an insulating ferrule was used to block and seal the inside of the insulating outer cylinder from the outside atmosphere.

In this way, the batteries of Examples 1 to 3 and Comparative Example 1 were produced.

### [Charge and Discharge Test]

The battery was placed in a 25°C thermostatic chamber.

The battery was charged at a constant current of 0.05 C rate (20-hour rate) relative to the theoretical capacity of the battery. The end-of-charge voltage was 4.3 V (vs. Li).

Next, the battery was discharged also at a current value of 0.05 C rate. The discharge was terminated at a voltage of 2.5 V (vs. Li).

Table 1 indicates initial charge and discharge efficiencies of the batteries of Examples 1 to 3 and Comparative Example 1.

### <Example 1>

As the organic solvent, xylene with a boiling point of 140°C was used. The polar term δp of Hansen solubility parameter for xylene is 1.0. The positive electrode material was prepared by the above-described method and dried in an argon atmosphere by the above-described method. A battery was produced by using this and subjected to a charge and discharge test.

### <Example 2>

As the organic solvent, mesitylene having a boiling point of 165°C was used. The polar term δp of Hansen solubility parameter for mesitylene is 0.6. The positive electrode material was prepared by the above-described method and dried in an argon atmosphere by the above-described method. A battery was produced by using this and subjected to a charge and discharge test.

### <Example 3>

As the organic solvent, tetralin having a boiling point of 208°C was used. The polar term 6p of Hansen solubility parameter for tetralin is 2.0. The positive electrode material was prepared by the above-described method and dried in an argon atmosphere by the above-described method. A battery was produced by using this and subjected to a charge and discharge test.

### <Comparative Example 1>

As the organic solvent, 1,2,4-trichlorobenzene having a boiling point of 213°C was used. The polar term 6p of Hansen solubility parameter for 1,2,4-trichlorobenzene is 4.2. The positive electrode material was prepared by the above-described method and dried in an argon atmosphere by the above-described method. A secondary battery was produced by using this and subjected to a charge and discharge test.

**[Table 1]**

| | Organic Solvent | Boiling Point [°C] | Charge and Discharge Efficiency [%] |
|---|---|---|---|
| Example 1 | xylene | 140 | 91.9 |
| Example 2 | mesitylene | 165 | 90.9 |
| Example 3 | tetralin | 208 | 92.9 |
| Comparative Example 1 | 1,2,4-trichlorobenzene | 213 | 65.2 |

### <Discussion>

Table 1 indicates the charge and discharge efficiencies of the batteries in Examples 1 to 3 and Comparative Example 1, in which the positive electrodes were produced by using organic solvents having different boiling points. The batteries in Examples 1 to 3 that used the organic solvents having a boiling point of less than or equal to 212°C showed significantly improved charge and discharge efficiency compared to the battery in Comparative Example 1 that used the organic solvent having a boiling point greater than 212°C. This can be attributed to the fact that, in Comparative Example 1, a large amount of solvent remained after drying, and this residual solvent degraded the oxyhalide solid electrolyte on the high potential side.

### Industrial Applicability

The batteries of the present disclosure can be used, for example, as all-solid-state lithium-ion secondary batteries. Reference Signs List

- 1000: positive electrode material
- 100: solid electrolyte
- 110: positive electrode active material
- 111: organic solvent
- 2000: positive electrode plate
- 201: positive electrode
- 202: current collector
- 3000: battery
- 301: positive electrode
- 302: solid electrolyte layer
- 303: negative electrode

## Claims

1. A positive electrode material comprising:
a positive electrode active material;
a solid electrolyte; and
an organic solvent, wherein
the solid electrolyte contains Li, M, O, and X,
M is at least one selected from the group consisting of Ta and Nb,
X is at least one selected from the group consisting of F, Cl, Br, and I, and
the organic solvent has a boiling point of less than or equal to 212°C.

2. The positive electrode material according to claim 1, wherein the organic solvent has a boiling point of less than or equal to 208°C.

3. The positive electrode material according to claim 1 or 2, wherein, in the solid electrolyte, X includes Cl.

4. The positive electrode material according to any one of claims 1 to 3, wherein the solid electrolyte has a crystalline phase in which at least one peak exists in a diffraction angle 2θ range of greater than or equal to 11.05° and less than or equal to 13.86° in an X-ray diffraction pattern obtained by X-ray diffraction measurement using Cu-Kα radiation as a radiation source.

5. The positive electrode material according to any one of claims 1 to 4, wherein, in the solid electrolyte, a molar ratio of O to X, O/X, is greater than or equal to 0.16 and less than or equal to 0.35.

6. The positive electrode material according to any one of claims 1 to 5, wherein, in the solid electrolyte, a molar ratio of Li to M, Li/M, is greater than or equal to 0.60 and less than or equal to 2.4.

7. The positive electrode material according to claim 6, wherein the molar ratio Li/M is greater than or equal to 0.96 and less than or equal to 1.20.

8. The positive electrode material according to any one of claims 1 to 7, wherein the organic solvent contains at least one selected from the group consisting of a compound having a halogen group and a hydrocarbon.

9. The positive electrode material according to claim 8, wherein the compound having a halogen group has only a halogen group as a functional group.

10. The positive electrode material according to any one of claims 1 to 9, wherein the organic solvent contains an aromatic compound.

11. The positive electrode material according to any one of claims 1 to 10, wherein the organic solvent contains at least one selected from the group consisting of tetralin, mesitylene, xylene, cumene, pseudocumene, ethylbenzene, chlorobenzene, 2,4-dichlorobenzene, o-chlorotoluene, 1,3-dichlorobenzene, p-chlorotoluene, 1,2-dichlorobenzene, 1,4-dichlorobutane, 2,4-dichlorotoluene, and 3,4-dichlorotoluene.

12. The positive electrode material according to claim 11, wherein the organic solvent contains at least one selected from the group consisting of tetralin, mesitylene, and xylene.

13. The positive electrode material according to any one of claims 1 to 12, wherein the organic solvent has a polar term 6p of Hansen solubility parameter of less than or equal to 4.3.

14. A method of producing a positive electrode comprising removing the organic solvent from the positive electrode material according to any one of claims 1 to 13.

15. A method of producing a positive electrode plate comprising:
applying the positive electrode material according to any one of claims 1 to 13 onto a current collector; and
removing the organic solvent from the positive electrode material applied onto the current collector.

16. The method of producing a battery including a positive electrode, a negative electrode, and a solid electrolyte layer located between the positive electrode and the negative electrode, the method comprising removing the organic solvent from the positive electrode material according to any one of claims 1 to 13 to produce the positive electrode.
